# EUROPÄISCHE PATENTSCHRIFT

(11) **EP 3 470 724 B1**
(45) Veröffentlichungstag und Bekanntmachung des Hinweises auf die Patenterteilung: **05.01.2022**
(21) Anmeldenummer: 18198940.1
(22) Anmeldetag: 05.10.2018
(51) Int. Cl.: F16L 58/10, B05D 7/22, B05C 7/08, F16L 55/1645, F16L 55/18

(54) **VERFAHREN UND VORRICHTUNG ZUR INNENBESCHICHTUNG VON ROHREN UND/ODER ROHRLEITUNGEN**
METHOD AND DEVICE FOR COATING THE INSIDE OF PIPES AND/OR PIPELINES
PROCÉDÉ ET DISPOSITIF DE REVÊTEMENT INTÉRIEUR DES TUYAUX ET/OU DE CONDUITES

(30) Priorität: 10.10.2017 DE 102017009372
(43) Veröffentlichungstag der Anmeldung: 17.04.2019
(73) Patentinhaber: Kipp Umwelttechnik GmbH, 33659 Bielefeld (DE)
(72) Erfinder: Kipp, Jens-Werner, 33659 Bielefeld (DE)
(74) Vertreter: Wickord, Wiro

(56) Entgegenhaltungen:
- EP-A2- 0 393 433
- DE-A1- 2 448 932
- DE-C1- 19 822 301
- GB-A- 2 065 263
- GB-A- 2 133 497
- US-A- 4 735 168

## Beschreibung

Die Erfindung betrifft ein Verfahren und eine Vorrichtung zur Beschichtung von Rohren, welche in Bezug auf eine Rohrlängsrichtung vertikal orientiert sind und einen kreisförmigen Innenquerschnitt aufweisen.

Aus der GB 2 065 263 A ist eine Vorrichtung zur Aufarbeitung von Rohrleitungen bekannt. Die Rohrleitungen sind dabei unterirdisch verlegt und jedenfalls abschnittsweise horizontal orientiert.

Aus der DE 24 48 932 A1 ist eine Vorrichtung zum Abdichten und Beschichten einer Rohrleitung bekannt.

Es sind zur Innenbeschichtung von Rohren bereits diverse Verfahren und Vorrichtungen, zumeist Spraysysteme, bekannt. Üblicherweise wird einer schnell drehenden Schleudervorrichtung ein Beschichtungsmittel, dem zusätzlich eine oder mehrere granulare Komponenten und insbesondere eine Pulverkomponente zugesetzt werden, zugeführt und durch die Schleuderbewegung der Vorrichtung an die Rohrinnenwandung geschleudert. Gleichzeitig wird die Schleudervorrichtung in einer definierten Geschwindigkeit durch das Rohr bewegt. Auf diese Weise wird die gesamte innere Oberfläche der Rohrwandung beschichtet. Beispielsweise ist ein solches Verfahren und eine zur Durchführung des Verfahrens ausgebildete Vorrichtung in der DD 271 654 A1 beschrieben.

Diese Anlagen arbeiten bei der Beschichtung vertikal ausgerichteter Rohre von der oberen Rohrmündung aus. Das relativ schwere Equipment umfasst eine Schleuderscheibe mit einem Antrieb und muss an einem Platz nahe der oberen Rohrmündung transportiert werden.

Aufgabe der Erfindung ist es, ein leichtes und robustes Beschichtungssystem für Innenwandungen von Rohren bereitzustellen.

Zur Lösung der Aufgabe weist die Erfindung die Merkmale der Patentansprüche 1 und 9 auf.

Demzufolge sieht das erfindungsgemäße Verfahren zur Beschichtung von in Bezug auf eine Rohrlängsrichtung vertikal orientierten Rohren mit einem kreisförmigen Innenquerschnitt vor, dass eine Beschichtungseinheit mit mindestens zwei drehstarr miteinander durch eine Halterung verbundenen und in die Rohrlängsrichtung zueinander beabstandeten angeordneten und horizontal erstreckte Scheiben von unten nach oben durch das Rohr geführt wird, dass in einen zwischen den Scheiben gebildeten Zwischenraum Druckluft und ein flüssiges Beschichtungsmittel mit einem Druck von zumindest 1 bar zugeführt wird, indem die Druckluft und das flüssige Beschichtungsmittel durch zumindest einen Zuführungsschlauch bis zu einer bezogen auf die vertikale Orientierung des Rohrs oberen Scheibe und weiter durch eine an der oberen Scheibe gebildeten Durchgangsöffnung in den Zwischenraum gelangen, dass die Druckluft und das flüssige Beschichtungsmittel durch den Aufprall auf eine der oberen Scheibe gegenüberliegende untere Scheibe zerstäubt werden und im Bereich des Zwischenraums ringsum auf eine Rohrinnenwandung treffen, dass sich die Druckluft und das flüssige Beschichtungsmittel durch den Aufprall auf die Rohrinnenwandung entmischen und dass das flüssige Beschichtungsmittel auf der Rohrinnenwandung anhaftet.

Ferner umfasst die erfindungsgemäße Vorrichtung zum Beschichten von in Bezug auf eine Rohrlängsrichtung vertikal orientierten Rohren mit einem kreisförmigen Innenquerschnitt
- eine Beschichtungseinheit mit mindestens zwei drehstarr miteinander durch eine Halterung verbundenen und in die Rohrlängsrichtung zueinander beabstandeten angeordneten und horizontal erstreckte Scheiben, wobei zwischen den Scheiben ein Zwischenraum gebildet ist, wobei ein Außendurchmesser der Scheiben kleiner ist als ein Innendurchmesser des Rohrs und wobei in einer bezogen auf die vertikale Orientierung des Rohrs oberen Scheibe eine Durchgangsöffnung vorgesehen ist,
- und zumindest einen Zuführungsschlauch zum Zuführen von Druckluft und von wenigstens einem flüssigen Beschichtungsmittel, wobei der mindestens eine Zuführungsschlauch an die in der oberen Scheibe vorgesehene Durchführungsöffnung so angeschlossen ist, dass die Druckluft und das flüssige Beschichtungsmittel durch die Durchführungsöffnung in den Zwischenraum gelangen.

Der besondere Vorteil der Erfindung besteht darin, dass durch eine Umlenkung eines axial in die Rohrlängsrichtung zugeführten Strahls aus Druckluft und dem flüssigen Beschichtungsmittel die Rohrinnenwandungen gleichmäßig beschichtet wird, wobei das Beschichtungssystem in einer einstellbaren Geschwindigkeit durch das Rohr geführt wird. Es wird dabei auf eine Rotationsscheibe mit einem Antrieb verzichtet, so dass die erfindungsgemäße Vorrichtung besonders flexibel verwendet werden kann und das Verfahren besonders einfach anzuwenden ist. Es werden hierzu zumindest zwei aus Kunststoff oder Metall bestehende Scheiben einer in das Rohr eingeführten Beschichtungseinheit mit einem definierten Abstand von beispielsweise 30 mm mittels mindestens einer Halterung drehstarr miteinander gekoppelt. Die Verbindung kann beispielsweise aus einem Stift oder einer Schraube bestehen und in der Länge einstellbar sein, um den Abstand zwischen den Scheiben auf ein Maß zu bringen, dass einen optimalen Beschichtungseffekt ergibt. Die Verbindung kann auch flexibel sein.

Aus den Unteransprüchen und der nachfolgenden Beschreibung sind weitere Vorteile, Merkmale und Einzelheiten der Erfindung zu entnehmen. Dort erwähnte Merkmale können jeweils einzeln für sich oder auch in beliebiger Kombination erfindungswesentlich sein. Erfindungsgemäß beschriebene Merkmale und Details der Vorrichtung gelten selbstverständlich auch im Zusammenhang mit dem erfindungsgemäßen Verfahren und umgekehrt. So kann auf die Offenbarung zu den einzelnen Erfindungsaspekten stets wechselseitig Bezug genommen werden. Die Zeichnungen dienen lediglich beispielhaft der Klarstellung der Erfindung und haben keinen einschränkenden Charakter.

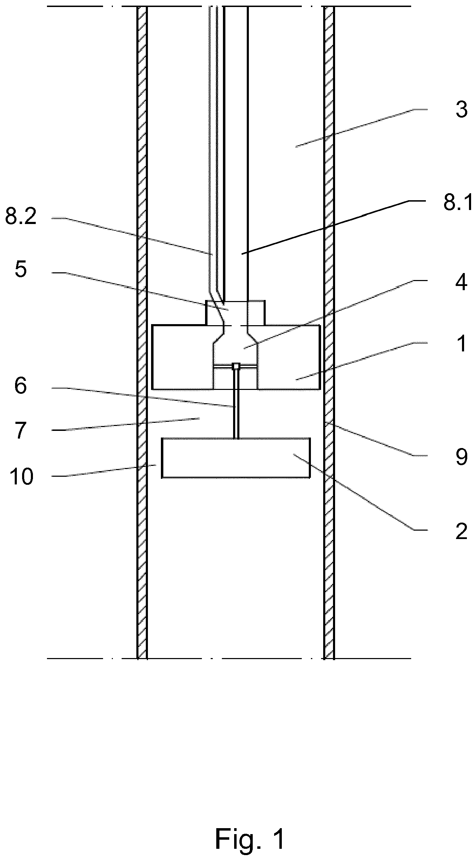

Fig. 1 zeigt eine erfindungsgemäße Vorrichtung zur Durchführung des erfindungsgemäßen Verfahrens.

Eine Beschichtungseinheit zum Beschichten einer Rohrinnenwandung 9 eines vertikal orientierten Rohrs 3 umfasst als wesentliche Komponenten zwei Scheiben 1, 2, die in vertikaler Richtung zueinander beabstandet angeordnet sind und durch eine Halterung 6 drehstarr miteinander verbunden sind. An einer oberen Scheibe 1 der Beschichtungseinheit ist eine Durchgangsöffnung 4 ausgebildet, an die ein Zuführungsschlauch 8.1 für Druckluft und einen weiteren Zuführungsschlauch 8.2 für ein flüssiges Beschichtungsmittel mittels einer Anschlussverbindung 5 angeschlossen sind. Die obere Scheibe 1 mit der Durchgangsöffnung 4 dient zugleich als Führung der Beschichtungsvorrichtung in dem Rohr 3 und weist zur Gewährleistung einer möglichst genauen Führung entweder ringsum einen so gering wie möglich gehaltenen Ringspalt auf oder wird durch zusätzliche Führungen parallel zu den Rohrwandungen geführt.

Durch die Durchgangsöffnung 4 in der Scheibe 1 werden der Druckluftstrom sowie das flüssige Beschichtungsmittel auf eine der oberen Schiebe 1 gegenüberliegende untere Scheibe 2 gerichtet. Die mittig angebrachte Halterung 6 bewirkt durch die Verringerung einer Querschnittsfläche der Durchgangsöffnung 4 dabei einen Düseneffekt und die Geschwindigkeit des Strahls wird erhöht.

Durch den Aufprall des Druckluftstrahls samt Beschichtungsmittel auf die untere Scheibe 2 erfolgt eine zusätzliche feine Vermischung des Beschichtungsmittels mit der Druckluft. Sofern das Beschichtungsmittel aus zumindest zwei Komponenten besteht, werden auch diese durch die Aufprallenergie fein vermischt. Der Strahl wird durch den Aufprall auf die hintere Scheibe 2 zwangsweise umgelenkt und dadurch umlaufend in der Breite des Zwischenraums 7 zwischen den Scheiben 1, 2 mit hoher Geschwindigkeit zum Aufprall an die Rohrinnenwandung 9 gezwungen. Der Strahl verliert durch den Aufprall an Geschwindigkeit und entmischt sich weitgehend, wobei das Beschichtungsmittel an der Rohrinnenwandung 9 verbleibt.

Wenn die Gesamtfläche des umlaufenden Ringspaltes 10 zwischen der hinteren geschlossenen Scheibe 2 und der Rohrwandung 9 näherungsweise zumindest dem Zweifachen einer Querschnittsfläche des Druckluft-Zuführungsschlauchs 8.1 beträgt, passiert der Strahl die hintere Scheibe 2 mit einem stark reduzierten Druck beziehungsweise je nach Dimension des Ringspaltes 10 auch annähernd drucklos. Der durch den Ringspalt 10 austretende Strahl bewirkt im Zusammenwirken mit der gleichzeitigen axialen Bewegung der Beschichtungseinheit durch das Rohr 3 eine Glättung des bereits auf die Rohrinnenwandung 9 aufgetragenen Beschichtungsmittels.

Die Druckluft und das Beschichtungsmittel werden durch die Zuführungsschläuche 8.1, 8.2 der Beschichtungseinheit zugeführt. Der Druckluft-Zuführungsschlauch 8.1 dient vorliegend gleichzeitig zur Bewegung der Beschichtungseinheit in eine Rohrlängsrichtung des zu beschichtenden Rohres 3.

Ein Teil der Zuführungsschläuche 8.1, 8.2 kann vorzugsweise als Schlauchpaket auf einer nicht dargestellten Haspel außerhalb des Rohrs 3 bevorratet werden. Optional kann ein Sicherungsseil, beispielsweise ein Drahtseil, als Zugentlastung für den Druckluft-Zuführungsschlauch 8.1 vorgesehen werden.

Die Haspel beziehungsweise eine andere geeignete Bewegungsvorrichtung für die Beschichtungseinheit sind vorzugsweise steuerbar. Durch die Bewegungsgeschwindigkeit der Beschichtungseinheit kann die Schichtstärke der Beschichtung bestimmt werden.

Beispielsweise kann die Beschichtungseinheit in dem Rohr 3 vertikal bewegt werden, indem der Druckluft-Zuführungsschlauch 8.1 über zwei mantelseitig angelegte Anpressrollen bewegt wird.

Als Beschichtungsmittel kann beispielsweise Epoxidharz auf die Rohrinnenwandung 9 aufgetragen werden. Beispielsweise können der Druckluft zusätzliche Komponenten und insbesondere ein Härter für das Beschichtungsmittel oder Festpartikel zur statischen Verstärkung des Beschichtungsmittels zugesetzt worden. Beispielsweise können das Beschichtungsmittel oder die Druckluft erwärmt sein. Durch das Erwärmen kann die Viskosität des Beschichtungsmittels beeinflusst werden.

Die Druckluft und das Beschichtungsmittel können wahlweise in dem Rohr 3 oder außerhalb des Rohrs 3 zusammengeführt und gemischt werden. Beispielsweise können die Druckluft und das Beschichtungsmittel über einen gemeinsamen Zuführungsschlauch zu der Beschichtungseinheit geführt werden. Der gemeinsame Zuführungsschlauch kann ebenfalls auf der Haspel gewickelt werden.

Gleiche Bauteile und Bauteilfunktionen sind durch gleiche Bezugszeichen gekennzeichnet.

### Bezugszeichenliste

- 1: obere Scheibe
- 2: untere Scheibe
- 3: Rohr
- 4: Durchgangsöffnung
- 5: Anschlussverbindung
- 6: Halterung
- 7: Zwischenraum
- 8.1: Zuführungsschlauch
- 8.2: Zuführungsschlauch
- 9: Rohrinnenwandung
- 10: Ringspalt

## Patentansprüche

1. Verfahren zum Beschichten von in Bezug auf eine Rohrlängsrichtung vertikal orientierten Rohren (3) mit einem kreisförmigen Innenquerschnitt, wobei eine Beschichtungseinheit mit mindestens zwei drehstarr miteinander durch eine Halterung (6) verbundenen, in die Rohrlängsrichtung zueinander beabstandeten angeordneten und im Wesentlichen horizontal erstreckte Scheiben (1, 2) von unten nach oben durch das Rohr (3) geführt wird, wobei in einen zwischen den Scheiben (1, 2) gebildeten Zwischenraum (7) Druckluft und ein flüssiges Beschichtungsmittel mit einem Druck von zumindest 1 bar zugeführt werden, indem die Druckluft und das flüssige Beschichtungsmittel durch zumindest einen Zuführungsschlauch (8.1, 8.2) bis zu einer bezogen auf die vertikale Orientierung des Rohrs (3) oberen Scheibe (1) und weiter durch eine an der oberen Scheibe (1) gebildeten Durchgangsöffnung (4) in den Zwischenraum (7) gelangen, wobei die Druckluft und das flüssige Beschichtungsmittel durch den Aufprall auf eine der oberen Scheibe (1) gegenüberliegende untere Scheibe (2) der Beschichtungseinheit zerstäubt werden und im Bereich des Zwischenraums (7) ringsum auf eine Rohrinnenwandung (9) treffen, wobei sich die Druckluft und das flüssige Beschichtungsmittel durch den Aufprall auf die Rohrinnenwandung (9) entmischen und wobei das flüssige Beschichtungsmittel auf der Rohrinnenwandung (9) anhaftet.

2. Verfahren nach Anspruch 1, **dadurch gekennzeichnet, dass** als flüssiges Beschichtungsmittel Epoxidharz auf die Rohrinnenwandung (9) aufgetragen wird.

3. Verfahren nach Anspruch 1 oder 2, **dadurch gekennzeichnet, dass** die Beschichtungseinheit beim Verfahren derselben in dem Rohr (3) geführt wird, indem die obere Schiebe (1) gegen die Rohrinnenwandung (9) abgestützt ist.

4. Verfahren nach einem der Ansprüche 1 bis 3, **dadurch gekennzeichnet, dass** das Beschichtungsmittel aus mehr als einer Komponente besteht.

5. Verfahren nach einem der Ansprüche 1 bis 4, **dadurch gekennzeichnet, dass** die Druckluft und das Beschichtungsmittel und/oder die Komponenten des Beschichtungsmittels vor oder in der Beschichtungseinheit und insbesondere in der Durchgangsöffnung (4) und/oder dem mindestens einen Zuführungsschlauch (8.1, 8.2) gemischt werden.

6. Verfahren nach einem der Ansprüche 1 bis 5, **dadurch gekennzeichnet, dass** die Beschichtungseinheit mittels des wenigstens einen Zuführungsschlauches (8.1, 8.2) und bevorzugt mittels eines Druckluft-Zuführungsschlauchs (8.1) axial durch das Rohr (3) bewegt wird

7. Verfahren nach einem der Ansprüche 1 bis 6, **dadurch gekennzeichnet, dass** der mindestens eine Zuführungsschlauch (8.1, 8.2) beim Beschichten der Rohrinnenwandung (9) auf eine Haspel gewickelt wird und dass eine Geschwindigkeit einer Bewegung der Beschichtungseinheit durch die Drehgeschwindigkeit der Haspel gesteuert wird.

8. Verfahren nach einem der Ansprüche 1 bis 7, **dadurch gekennzeichnet, dass** das Beschichtungsmittel und/oder die Druckluft der Beschichtungseinheit erwärmt zugeführt werden.

9. Vorrichtung zur Beschichtung von in Bezug auf eine Rohrlängsrichtung vertikal orientierten Rohren (3) mit einem kreisförmigen Innenquerschnitt umfassend eine Beschichtungseinheit mit mindestens zwei drehstarr miteinander durch eine Halterung (6) verbundenen, in die Rohrlängsrichtung zueinander beabstandet angeordneten Scheiben (1, 2), wobei zwischen den Scheiben (1, 2) ein Zwischenraum (7) gebildet ist, wobei ein Außendurchmesser der Scheiben (1, 2) dazu eingerichtet ist kleiner als ein Innendurchmesser des Rohrs (3) zu sein und wobei in einer bezogen auf die vertikale Orientierung des Rohrs (3) oberen Scheibe (1) mittig eine Durchgangsöffnung (4) vorgesehen ist, und umfassend zumindest einen Zuführungsschlauch (8.1) zum Zuführen von Druckluft und einen weiteren Zuführungsschlauch (8.2) zum Zuführen von wenigstens einem flüssigen Beschichtungsmittel, wobei die Zuführungsschläuche (8.1, 8.2) an die in der oberen Scheibe (1) mittig vorgesehene, einzige Durchführungsöffnung (4) mittels einer Anschlussverbindung (5) so angeschlossen sind, dass die Druckluft und das flüssige Beschichtungsmittel durch die Durchführungsöffnung (4) in den Zwischenraum (7) gelangen derart, dass durch die Durchgangsöffnung (4) in der oberen Scheibe (1) der Druckluftstrom sowie das flüssige Beschichtungsmittel auf die der oberen Scheibe (1) gegenüberliegende untere Scheibe (2) gerichtet sind, wobei die Scheiben (1, 2) horizontal erstreckt sind und wobei die obere Scheibe (1) einen größeren Außendurchmesser aufweist als die gegenüberliegende untere Scheibe (2).

10. Vorrichtung nach Anspruch 9, **dadurch gekennzeichnet, dass** die Halterung (6) flexibel ausgebildet ist

11. Vorrichtung nach Anspruch 9 oder 10, **dadurch gekennzeichnet, dass** zum Bevorraten eines Abschnitts des mindestens einen Zuführungsschlauchs (8.1, 8.2) eine Haspel vorgesehen ist.

12. Vorrichtung nach einem der Ansprüche 9 bis 11, **dadurch gekennzeichnet, dass** zusätzlich zu dem mindestens einen Zuführungsschlauch (8.1, 8.2) ein Sicherheitsseil vorgesehen ist zum Halten der Beschichtungseinheit und/oder dass das Sicherungsseil mit über die Haspel geführt ist.

13. Verwendung einer Vorrichtung nach einem der Ansprüche 9 bis 12 zur Durchführung eines Beschichtungsverfahrens nach einem der Ansprüche 1 bis 8.

## Claims

1. Method for coating pipes (3) orientated vertically in terms of a longitudinal pipe direction and having a circular internal cross section, wherein a coating unit, which has at least two substantially horizontally extending discs (1, 2) which are connected in a mutually rotationally engaged manner by a mounting (6) and arranged spaced apart in the longitudinal pipe direction, is guided upwards through the pipe (3) from below, compressed air and a liquid coating medium being fed into a gap (7) formed between the discs (1, 2) at a pressure of at least 1 bar in that the compressed air and the liquid coating medium pass through at least one feed hose (8.1, 8.2) as far as an upper disc (1), in terms of the vertical orientation of the pipe (3), and onwards into the gap (7) through a through-opening (4) formed on the upper disc (1), the compressed air and the liquid coating medium being atomised by the collision against a lower disc (2), opposite the upper disc (1), of the coating unit and striking an internal pipe wall (9) in the region of the gap (7), the compressed air and the liquid coating medium being segregated by the collision against the internal pipe wall (9) and the liquid coating medium adhering to the internal pipe wall (9).

2. Method according to claim 1, **characterised in that** epoxy resin is applied to the internal pipe wall (9) as a liquid coating medium.

3. Method according to either claim 1 or claim 2, **characterised in that** the coating unit is guided during its displacement in the pipe (3) **in that** the upper disc (1) is braced against the internal pipe wall (9).

4. Method according to any of claims 1 to 3, **characterised in that** the coating medium consists of more than one component.

5. Method according to any of claims 1 to 4, **characterised in that** the compressed air and the coating medium and/or the components of the coating medium are mixed upstream from or in the coating unit and in particular in the through-opening (4) and/or the at least one feed hose (8.1, 8.2).

6. Method according to any of claims 1 to 5, **characterised in that** the coating unit is moved axially through the pipe (3) by means of the at least one feed hose (8.1, 8.2) and preferably by means of a compressed air feed hose (8.1).

7. Method according to any of claims 1 to 6, **characterised in that** the at least one feed hose (8.1, 8.2) is wound onto a reel as the internal pipe wall (9) is coated, and **in that** a movement speed of the coating unit is controlled by the rotational speed of the reel.

8. Method according to any of claims 1 to 7, **characterised in that** the coating medium and/or the compressed air are fed heated to the coating unit.

9. Device for coating pipes (3) orientated vertically in terms of a longitudinal pipe direction and having a circular internal cross section, comprising a coating unit, which has at least two discs (1, 2) which are connected in a mutually rotationally engaged manner by a mounting (6) and arranged spaced apart in the longitudinal pipe direction, a gap (7) being formed between the discs (1, 2), an external diameter of the discs (1, 2) being set to be smaller than an internal diameter of the pipe (3), and a through-opening (4) being provided centrally in an upper disc (1) in terms of the vertical orientation of the pipe (3), and comprising at least a feed hose (8.1) for feeding in compressed air and a further feed hose (8.2) for feeding in at least one liquid coating medium, the feed hoses (8.1, 8.2) being attached to the single through-opening (4) provided centrally in the upper disc (1) by means of an attaching connection (5) in such a way that the compressed air and the liquid coating medium pass into the gap (7) through the through-opening (4) in such a way that the through-opening (4) in the upper disc (1) directs the compressed air flow and the liquid coating medium onto the lower disc (2) opposite the upper disc (1), the discs (1, 2) extending horizontally and the upper disc (1) having a larger external diameter than the opposite lower disc (2).

10. Device according to claim 9, **characterised in that** the mounting (6) is formed flexible.

11. Device according to either claim 9 or claim 10, **characterised in that** a reel is provided for holding a portion of the at least one feed hose (8.1, 8.2) in reserve.

12. Device according to any of claims 9 to 11, **characterised in that**, in addition to the at least one feed hose (8.1, 8.2), a safety cable is provided for holding the coating unit, and/or **in that** the safety cable is also guided over the reel.

13. Use of a device according to any of claims 9 to 12 to carry out a coating method according to any of claims 1 to 8.

## Revendications

1. Procédé de revêtement de tubes (3) qui sont orientés verticalement par rapport à une direction longitudinale de tube et qui présentent une section transversale intérieure circulaire, dans lequel une unité de revêtement comportant au moins deux disques (1, 2) qui sont reliés l'un à l'autre de manière solidaire en rotation par un support (6), sont disposés à distance l'un de l'autre dans la direction longitudinale de tube et s'étendent sensiblement horizontalement, est guidée de bas en haut à travers le tube (3), dans lequel de l'air comprimé et un agent de revêtement liquide sont amenés dans un espace intermédiaire (7) formé entre les disques (1, 2) à une pression d'au moins 1 bar, l'air comprimé et l'agent de revêtement liquide passant par au moins un tuyau d'amenée (8.1, 8.2) jusqu'à un disque supérieur (1) par rapport à l'orientation verticale du tube (3) et ensuite par une ouverture de passage (4) formée sur le disque supérieur (1) dans l'espace intermédiaire (7), dans lequel l'air comprimé et l'agent de revêtement liquide sont pulvérisés par l'impact sur un disque inférieur (2) de l'unité de revêtement situé en face du disque supérieur (1) et rencontrent une paroi intérieure de tube (9) sur toute la circonférence dans la zone de l'espace intermédiaire (7), dans lequel l'air comprimé et l'agent de revêtement liquide se séparent en raison de l'impact sur la paroi intérieure de tube (9) et dans lequel l'agent de revêtement liquide adhère à la paroi intérieure de tube (9).

2. Procédé selon la revendication 1, **caractérisé en ce que** de la résine époxy est appliquée comme agent de revêtement liquide sur la paroi intérieure de tube (9).

3. Procédé selon la revendication 1 ou 2, **caractérisé en ce que** l'unité de revêtement est guidée dans le tube (3) pendant son déplacement, le disque supérieur (1) étant en appui contre la paroi intérieure de tube (9).

4. Procédé selon l'une des revendications 1 à 3, **caractérisé en ce que** l'agent de revêtement est constitué de plus d'un composant.

5. Procédé selon l'une des revendications 1 à 4, **caractérisé en ce que** l'air comprimé et l'agent de revêtement et/ou les composants de l'agent de revêtement sont mélangés avant ou dans l'unité de revêtement et en particulier dans l'ouverture de passage (4) et/ou ledit au moins un tuyau d'amenée (8.1, 8.2).

6. Procédé selon l'une des revendications 1 à 5, **caractérisé en ce que** l'unité de revêtement est déplacée axialement à travers le tube (3) au moyen dudit au moins un tuyau d'amenée (8.1, 8.2) et de préférence au moyen d'un tuyau d'amenée d'air comprimé (8.1).

7. Procédé selon l'une des revendications 1 à 6, **caractérisé en ce que** ledit au moins un tuyau d'amenée (8.1, 8.2) est enroulé sur un dévidoir lors du revêtement de la paroi intérieure de tube (9) et qu'une vitesse d'un déplacement de l'unité de revêtement est commandée par la vitesse de rotation du dévidoir.

8. Procédé selon l'une des revendications 1 à 7, **caractérisé en ce que** l'agent de revêtement et/ou l'air comprimé sont amenés chauffés à l'unité de revêtement.

9. Dispositif de revêtement de tubes (3) qui sont orientés verticalement par rapport à une direction longitudinale de tube et présentent une section transversale intérieure circulaire, comprenant une unité de revêtement comportant au moins deux disques (1, 2) qui sont reliés l'un à l'autre de manière solidaire en rotation par un support (6) et sont disposés à distance l'un de l'autre dans la direction longitudinale de tube, dans lequel un espace intermédiaire (7) est formé entre les disques (1, 2), dans lequel un diamètre extérieur des disques (1, 2) est conçu plus petit qu'un diamètre intérieur du tube (3) et dans lequel une ouverture de passage (4) est prévue de manière centrée dans un disque supérieur (1) par rapport à l'orientation verticale du tube (3), et comprenant au moins un tuyau d'amenée (8.1) pour l'amenée d'air comprimé et un autre tuyau d'amenée (8.2) pour l'amenée d'au moins un agent de revêtement liquide, dans lequel les tuyaux d'amenée (8.1, 8.2) sont raccordés à l'unique ouverture de passage (4) prévue de manière centrée dans le disque supérieur (1) au moyen d'un joint de raccordement (5) de sorte que l'air comprimé et l'agent de revêtement liquide passent par l'ouverture de passage (4) dans l'espace intermédiaire (7) de telle sorte que, par l'ouverture de passage (4) dans le disque supérieur (1), le flux d'air comprimé ainsi que l'agent de revêtement liquide sont dirigés vers le disque inférieur (2) situé en face du disque supérieur (1), dans lequel les disques (1, 2) s'étendent horizontalement et dans lequel le disque supérieur (1) présente un diamètre extérieur plus grand que le disque inférieur (2) situé en face.

10. Dispositif selon la revendication 9, **caractérisé en ce que** le support (6) est réalisé de manière flexible.

11. Dispositif selon la revendication 9 ou 10, **caractérisé en ce qu'**un dévidoir est prévu pour stocker une partie dudit au moins un tuyau d'amenée (8.1, 8.2).

12. Dispositif selon l'une des revendications 9 à 11, **caractérisé en ce que**, en plus dudit au moins un tuyau d'amenée (8.1, 8.2), une corde de sécurité est prévue pour maintenir l'unité de revêtement et/ou que la corde de sécurité est également guidée sur le dévidoir.

13. Utilisation d'un dispositif selon l'une des revendications 9 à 12 pour mettre en œuvre un procédé de revêtement selon l'une des revendications 1 à 8.
